(19) Europäisches Patentamt
European Patent Office
Office européen des brevets

(11) Numéro de publication: **0 267 126 B1**

(12) # FASCICULE DE BREVET EUROPEEN

(45) Date de publication de fascicule du brevet: **06.11.91**

(51) Int. Cl.$^5$: **C08L 83/04**, //C08K5/54, (C08L83/04,83:08,C08K5:54)

(21) Numéro de dépôt: **87420232.8**

(22) Date de dépôt: **03.09.87**

(54) **Composition diorganopolysiloxane durcissable en élastomère autoadhérent.**

(30) Priorité: **11.09.86 FR 8612892**

(43) Date de publication de la demande:
**11.05.88 Bulletin 88/19**

(45) Mention de la délivrance du brevet:
**06.11.91 Bulletin 91/45**

(84) Etats contractants désignés:
**AT BE CH DE ES FR GB GR IT LI LU NL SE**

(56) Documents cités:
**EP-A- 102 268**
**FR-A- 2 330 658**
**FR-A- 2 333 022**
**FR-A- 2 369 225**
**US-A- 3 440 261**
**US-A- 4 467 063**

(73) Titulaire: **RHONE-POULENC CHIMIE**
**25, quai Paul Doumer**
**F-92408 Courbevoie Cédex(FR)**

(72) Inventeur: **Peccoux, Pierre-Michel**
**71, rue Henri Gorjus**
**F-69004 Lyon(FR)**

(74) Mandataire: **Seugnet, Jean Louis et al**
**RHONE-POULENC INTERSERVICES Service Brevets Chimie Centre de Recherches des Carrières B.P. 62**
**F-69192 Saint-Fons Cédex(FR)**

**EP 0 267 126 B1**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

Rank Xerox (UK) Business Services

## Description

La présente invention concerne une composition diorganopolysiloxane stable au stockage en l'absence d'humidité et durcissable en un élastomère autoadhérent en présence d'humidité comportant comme constituants essentiels un polymère α - ω dihydroxydiorganopolysiloxane, un agent de réticulation cétiminoxysilane et un agent d'adhérence choisi parmi un ( Δ 2-imidazolinyl)alkylsilane et un copolymère diorganopolysiloxane contenant des motifs ( Δ 2-imidazolinyl)alkylsiloxane.

Les compositions monocomposantes à réticulant cetiminoxysilane comportant généralement en outre une charge minérale et un catalyseur de durcissement, sont bien connues depuis longtemps. Elles sont par exemple décrites dans les brevets français FR-A-1 314 649, FR-A-1 371 250, américains US-A-3 678 003 et US-A-3 986 999, dans le brevet britannique GB-A-1 468 467, dans le brevet belge BE-A-901 479 et dans le brevet européen EP-A-157 580.

Ces compositions sont notamment utilisées pour des applications de revêtement et de jointoiement et en particulier comme agent de scellage dans l'industrie du bâtiment pour réaliser des structures vitrées.

L'élastomère durci doit, dans cette application particulière, présenter un module d'élasticité relativement bas et surtout adhérer fortement au verre et au matériau constitutif de la structure dans laquelle le verre est monté, tel que le bois, l'aluminium, le béton, le PVC (polychlorure de vinyle), les caoutchoucs naturels et synthétiques, la pierre, la faïence et la brique.

Toutefois les élastomères issus des compositions à réticulant cétiminoxysilane présentent généralement une adhérence insuffisante vis-à-vis des matériaux rencontrés dans l'industrie du bâtiment et l'on a déjà proposé divers additifs incorporés dans la composition en vue de remédier à cette insuffisance.

Le brevet belge 901 479 propose ainsi d'utiliser des complexes du titane dont certains sont par ailleurs revendiqués comme catalyseurs de réticulation dans le brevet français FR-A-2 531 095.

Le brevet français FR-A-2 074 144 enseigne l'utilisation, comme agent d'adhérence, d'un silane dont chaque molécule contient au moins un groupe amino lié au silicium par au moins un atome de carbone, et au moins un radical hydrocarboné monovalent portant éventuellement comme substituant un groupe amino ou alcoxy et lié au silicium par un atome d'oxygène. Ces agents d'adhérence sont par ailleurs connus (dans la même application) pour des compositions dont l'agent de réticulation est un polyalcoxysilane (voir notamment le brevet européen EP-A-021 859). Ces agents d'adhérence sont présentés comme n'influençant pas la stabilité au stockage des matières premières durcissables susceptibles de donner des élalstomères sans pour autant être moins efficaces.

Des exemples typiques de cette famille d'agents d'adhérence sont les suivants :

$(C_2H_5O)_3Si(CH_2)_3NH_2$ γ -aminopropyl-triéthoxysilane

$CH_3(C_2H_5O)_2Si(CH_2)_3NH_2$ γ -aminopropyl-méthyl-diéthoxysilane

$(CH_3)(CH_3O)_2Si(CH_2)_3NH(CH_2)_2NH_2$ β-aminoéthyl, γ -aminopropyl-méthyl-diméthoxysilane.

Etant donné que cette famille d'agents d'adhérence présente les caractéristiques précitées pour les deux familles de compositions à réticulant polyalcoxysilane et cétiminoxysilane, d'homme de métier pourrait être amené à penser que tous les agents d'adhérence précédemment décrits pour une famille seraient également utilisables pour l'autre famille comme par exemple le silane de formule :

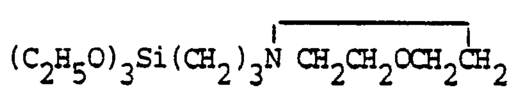

γ -morpholinopropyltriéthoxysilane

décrit comme agent d'adhérence dans les compositions à réticulant polyalcoxysilane dans le brevet français FR-A-2 572 415.

Toutefois, comme le montrent les exemples comparatifs ci-dessous il apparaît que les agents d'adhérence de l'art antérieur présentent, dans les compositions à réticulant cétiminoxysilane, au moins l'un des inconvénients ci-dessous.

1. - la stabilité au stockage des compositions est affectée par la présence de l'agent d'adhérence,
2. - la réticulation des compositions en élastomère est trop lente, en particulier à température ambiante,
3. - l'agent d'adhérence ne procure pas à l'élastomère une adhérence suffisante,
4. - les propriétés physiques de l'élastomère sont médiocres ou nettement insuffisantes en particulier pour les applications de jointoiement.

La présente invention a précisément pour objet de proposer un agent d'adhérence à incorporer dans

les compositions à réticulant cétiminoxysilane qui ne présente pas les inconvénients des agents d'adhérence connus ou sous une forme très atténuée.

Ce but et d'autres sont atteints par la présente invention qui concerne en effet une composition diorganopolysiloxane stable au stockage en l'absence d'humidité et durcissable en un élastomère en présence d'humidité, caractérisée en ce qu'elle comporte :

A. - 100 parties d'au moins un polymère $\alpha$ - $\omega$ dihydroxydiorganopolysiloxane de viscosité 700 à 1 000 000 mPa.s à 25 °C, formé d'une succession de motifs diorganosiloxy de formule $T_2SiO$, dans laquelle les radicaux T, identiques ou différents, représentent des radicaux hydrocarbonés ayant de 1 à 10 atomes de carbone, au moins 50 % en nombre des radicaux T étant des groupes méthyle,

B. - 0,5 à 20 parties d'au moins un agent de réticulation comportant au moins un cétiminoxysilane,

C. - 0,1 à 20 parties d'un agent d'adhérence choisi parmi :

C.1. - les silanes de formule :

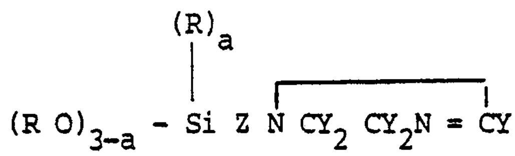 (1)

dans laquelle :

- les radicaux R, identiques ou différents représentent un radical alkyle en $C_1$-$C_{12}$, de préférence en $C_1$-$C_4$,
- les radicaux Y, identiques ou différents sont choisis parmi un radical R et un atome d'hydrogène,
- Z est un radical hydrocarboné aliphatique bivalent linéaire ou ramifié en $C_2$-$C_{12}$, de préférence en $C_2$-$C_5$,
- a représente O, 1 ou 2.

C.2. - un copolymère diorganopolysiloxane formé d'une succession de motifs $T_2SiO$ tels que définis sous A et comportant au moins un motif siloxane de formule :

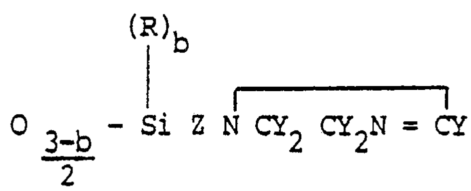 (2)

dans laquelle :

- b égal 1 ou 2 et R, Z et Y ont la définition donnée sous C.1.

D. - 0 à 250 parties de charges minérales.

E. - 0 à 3 parties d'un catalyseur de durcissement.

Les silanes $C_1$ et les diorganopolysiloxanes $C_2$ ainsi que leur procédé de préparation sont décrits dans les brevets français FR-A-1 360 395, FR-A-1 387 337 et FR-A-1 467 679 (cités comme référence) en tant qu'agents antistatiques applicables comme apprêts sur divers articles en matière organique dont des fibres synthétiques.

Une autre utilisation connue des silanes $C_1$ est l'assemblage de verre de sécurité stratifié sur des feuilles de matière synthétique plastifiée à température élevée comme décrit dans les brevets français FR-A-2 330 658 et FR-A-2 369 225. Il est donc clair que ces deux utilisations connues des composés $C_1$ et $C_2$ n'ont rien à voir avec la présente invention.

Comme silane $C_1$ préfère tout particulièrement utiliser, du fait de sa disponibilité dans le commerce, le silane de formule :

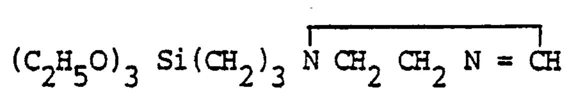

$\gamma$ - ( $\Delta$ 2-imidazolinyl)propyl-triéthoxysilane.

D'autres silanes $C_1$ sont également utilisables comme ceux de formules :

$$C_2H_5O(CH_3)_2SiCH_2CH(CH_3)CH_2NCH_2CH_2N{=}C{-}CH_3$$

$$(CH_3O)_3Si(CH_2)_2NCH(CH_3)CH_2N{=}C{-}CH_3$$

$$CH_3(CH_3O)_2SiCH_2CH(C_2H_5)CH_2NCH_2CH_2N{=}C{-}C_2H_5$$

$$(CH_3O)(CH_3)(C_5H_{11})Si(CH_2)_3NCH_2CH(C_2H_5)N{=}C{-}CH_3$$

$$(CH_3O)_2(C_{10}H_7)Si(CH_2)_3NCH_2CH_2{=}CH$$

$$(C_4H_9O)_3Si(CH_2)_4NCH(C_6H_{11})CH_2N{=}CH$$

$$(CH_3O)_2(C_3H_7)Si(CH_2)_3NCH_2CH_2N{=}C{-}C_{12}H_{25}$$

$$(CH_3O)(CH_3)(C_2H_5)Si(C_6H_4)CH_2NCH_2CH_2N{=}CH$$

Les polymères $\alpha$-$\omega$ di(hydroxy)diorganopolysiloxane A de viscosité 700 à 1 000 000 mPa.s à 25 °C, de préférence 1 000 à 700 000 mPa.s à 25 °C sont des polymères linéaires, constitués essentiellement de motifs diorganosiloxy de formule précitée $T_2SiO$, et bloquès à chaque extrémité de leur chaîne par un groupe hydroxyle ; toutefois, la présence de motifs monoorganosiloxy de formule $TSiO_{1,5}$ et/ou de motifs siloxy de formule $SiO_2$, n'est pas exclue dans la proportion d'au plus 2 % par rapport au nombre de motifs diorganosiloxy.

Les radicaux hydrocarbonés, ayant de 1 à 10 atomes de C, substitués ou non par des atomes d'halogènes ou des groupes cyano, représentés par les symboles T, englobent :

- les radicaux alkyles et halogénoalkyles ayant de 1 à 10 atomes de carbone tels que les radicaux méthyle, éthyle, propyle, isopropyle, butyle, pentyle, hexyle, éthyl-2 hexyle, octyle, décycle, trifluoro-3,3,3 propyle, trifluoro-4,4,4 butyle, pentafluoro-4,4,4,3,3 butyle.
- les radicaux cycloalkyles et halogénocycloalkyles ayant de 1 à 10 atomes de carbone tels que les radicaux cyclopentyle, cyclohexyle, méthylcyclohexyle, propylcyclohexyle, difluoro-2,3 cyclobutyle, difluoro-3,4 méthyl-5 cycloheptyle.
- les radicaux alcényles ayant de 2 à 4 atomes de carbone tels que les radicaux vinyle, allyle, butène-2 yle.
- les radicaux aryles et halogénoaryles mononucléaires ayant de 6 à 10 atomes de carbone tels que les radicaux phényle, tolyle, xylyle, chlorophényle, dichlorophényle, trichlorophényle.
- les radicaux cyanoalkyles dont les chaînons alkyles ont de 2 à 3 atomes de carbone tels que les radicaux $\beta$-cyanoéthyle et $\gamma$-cycnopropyle, les radicaux méthyle, phényle, vinyle et trifluoro-3,3,3 propyle sont les radicaux préférés.

A titre d'exemples concrets de motifs représentés par la formule $T_2SiO$ on peut citer ceux de formules :

$(CH_3)_2SiO$,
$CH_3(CH_2=CH)SiO$
$CH_3(C_6H_5)SiO$
$(C_6H_5)_2SiO$,
$CF_3CH_2CH_2(CH_3)SiO$
$NC$-$CH_2CH_2(CH_3)SiO$
$NC$-$CH(CH_3)$

$CH_2(CH_2=CH)SiO$
$NC\text{-}CH_2CH_2CH_2(C_6H_5)SiO$

Il doit être compris que l'on peut utiliser comme polymère A un mélange constitué de polymères α-ω di(hydroxy)diorganopolysiloxanes qui diffèrent entre eux par le poids moléculaire et/ou la nature des groupements liés aux atomes de silicium.

Ces polymères α-ω di(hydroxy)diorganopolysiloxane A sont commercialisés ; en outre, ils peuvent être aisément fabriqués selon des techniques maintenant bien connues. Il est souhaitable d'utiliser ces polymères après les avoir dévolatilisés par exemple par le procédé de dévolatilisation décrit dans le brevet américain US-A-4 356 116.

Les agents réticulants B sont employés à raison de 0,5 à 20 parties, de préférence 1 à 18 parties, pour 100 parties de polymères α-ω di(hydroxy)diorganopolysiloxanes A. Ce sont des composés organosiliciques portant plus de deux radicaux hydrolysables cétiminoxy par molécule, liés aux atomes de silicium.

De préférence, l'agent réticulant répond à la formule générale :

$Y_f^1SiZ^1_{4-f}$

dans laquelle :

- le symbole $Y^1$ représente un radical hydrocarboné en $C_1$-$C_{10}$, substitué ou non par des atomes d'halogène, des groupes cyano,
- les symboles $Z^1$, identiques ou différents, représentent des radicaux hydrolysables choisis parmi ceux de formules :

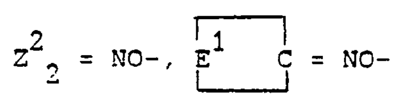 ,

dans lesquelles les symboles $Z^2$, identiques ou différents représentent des radicaux hydrocarbonés en $C_1$-$C_8$, le symbole $E^1$ représente un radical alkylène en $C_4$-$C_8$,
- le symbole f représente zéro ou un.

Les symbole $Y^1$ peut avoir la même signification que le symbole T des motifs précédents de formule $T_2SiO$ ; ainsi l'illustration donnée pour T convient également pour $Y^1$.

Les symboles $Z^2$ peuvent donc représenter des radicaux hydrocarbonés en $C_1$-$C_8$ englobent notamment :

- les radicaux alkyles en $C_1$-$C_8$ tels que les radicaux méthyle, éthyle, propyle, isopr aryles butyle, isobutyle, éthyl-2 hexyle, octyle.
- les radicaux alcényles en $C_2$-$C_4$, tels que les radicaux vinyle, allyle, butène-2 yle.
- les radicaux cycloalkyles en $C_5$-$C_8$ tels que les radicaux cyclopentyle, cyclohexyle, méthylcyclohexyle.
- les radicaux aryles mononucléaires en $C_6$-$C_8$ tels que les radicaux phényle, tolyle, xylyle.

Le symbole $E^1$ représente un radical alkylène en $C_4$-$C_8$ qui peut répondre aux formules : $-(CH_2)_4-$ , $-(CH_2)_5-$ , $-(CH_2)_6$,
$-(CH_2)_7-$ , $-CH_2-CH(C_2H_5)(CH_2)_3-$,
$-CH_2-CH_2-CH(CH_3)CH_2CH_2-$.

Comme exemple de silanes B on peut citer les silanes de formule :
$CH_3Si[ON=C(CH_3)_2]_3$ , $CH_3Si[ON=C(CH_3)C_2H_5]_3$ ,
$CH_2=CHSi[ON=C(CH_3)C_2H_5]_3$ , $C_6H_5Si[ON=C(CH_3)_2]_3$ ,
$CH_3Si[ON=C(C_2H_5)(CH_2)_3CH_3]_3$ ,
$CH_3Si[ON=C(CH_3)CH(C_2H_5)(CH_2)_3CH_3]_2$ ,
$(CH_3)_2C=NOSi[ON=C(CH_3)C_2H_5]_3$ ,

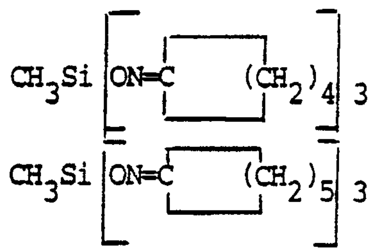

Les charges minérales D sont utilisées à raison de 0 à 250 parties, de préférence 5 à 200 parties, pour 100 parties des polymères $\alpha$-$\omega$ di(hydroxy)diorganopolysiloxanes A.

Ces charges peuvent se présenter sous la forme de produits très finement divisés dont le diamètre particulaire moyen est inférieur à 0,1 micromètre. Parmi ces charges figurent les silices de combustion et les silices de précipitation ; leur surface spécifique BET est généralement supérieure à 40 $m^2$/g.

Ces charges peuvent également se présenter sous la forme de produits plus grossièrement divisés, de diamètre particulaire moyen supérieur à 0,1 micromètre. Comme exemples de telles charges, on peut citer le quartz broyé, les silices de diatomées, le carbonate de calcium traité ou non traité, l'argile calcinée, l'oxyde de titane du type rutile, les oxydes de fer, de zinc, de chrome, de zirconium, de magnésium, les différentes formes d'alumine (hydratée ou non), le nitrure de bore, le lithopone, le métaborate de baryum, le sulfate de baryum, les microbilles de verre ; leur surface spécifique est généralement inférieure à 30 $m^2$/g.

Ces charges D peuvent avoir été modifiées en surface par traitement avec les divers composés organosiliciques habituellement employés pour cet usage. Ainsi les composés organosiliciques peuvent petre des organochlorosilanes, des diorganocyclopolysiloxanes, des hexaorganodisiloxanes, des hexaorganodisilazanes ou des diorganocyclopolysiloxanes (brevets français FR-A-1 126 884, FR-A-1 136 885, FR-A-1 236 505 ; brevet anglais GB-A-1 024 234). Les charges traitées renferment, dans la plupart des cas, de 3 à 30 % de leur poids de composés organosiliciques.

Les charges D peuvent être constituées d'un mélange de plusieurs types de charges de granulométrie différente ; ainsi par exemple, elles peuvent être constituées de 5 à 95 % de silices finement divisées de surface spécifique BET supérieure à 40 mR2F/g et de 95 à 5 % de silices plus grossièrement divisées de surface spécifique inférieure à 30 $m^2$/g ou de carbonate de calcium traité ou non traité.

Les compositions contenant de préférence un catalyseur E qui est un composé d'un métal choisi généralement parmi l'étain, le fer, le titane et le zirconium.

On utilise généralement de 0,0004 partie à 3 parties de E pour 100 parties de A.

En ce qui concerne l'étain, les catalyseurs les plus utilisés sont les dicarboxylates de dialkyl étain en particulier le dilaurate ou le diacétate de dibutylétain (ouvrage de NOLL "CHEMISTRY AND TECHNOLOGY OF SILICONES, page 337), et les diversatates de dibutylétain (brevet français FR-A-2 066 159).

On peut également utiliser les produits de réactions de dicarboxylates de dialkylétain sur les polyalcoxysilanes ou les polysilicates d'alkyle (brevets américains US-A-3 186 9 63 et US-A-3 862 919 et le brevet belge BE-A-842 305).

On peut également utiliser les chelates d'étain comme décrit dans le brevet européen EP-A-147 323).

En ce qui concerne le titane et le zirconium on peut utiliser les catalyseurs, objets du brevet européen EP-A-102 268).

Tous les brevets ci-dessus mentionnant des catalyseurs de durcissement utilisables sont cités comme références.

Outre les constituants A à E décrits ci-dessus, les compositions selon l'invention peuvent contenir d'autres ingrédients.

Parmi ces ingrédients figurent des composés organosiliciques, principalement des polymères, qui ont la faculté d'agir sur les caractéristiques physiques des compositions conformes à l'invention et/ou sur les propriétés mécaniques des élastomères silicones issus de ces compositions.

Ces composés sont bien connus, ils comprennent par exemple :

- des polymères $\alpha$-$\omega$ bis(triorganosiloxy)diorganopolysiloxanes de viscosité d'au moins 10 mPa.s à 25 °C dont les radicaux organiques, liés aux atomes de silicium sont choisis parmi les radicaux méthyle, vinyle, phényle ; de préférence sont utilisées de huiles $\alpha$ - $\omega$ bis(triméthylsiloxy)diméthylpolysiloxanes de viscosité 10 mPa.s à 25 °C à 1 500 mPa.s à 25 °C.
- des polymères méthylpolysiloxanes ramifiés, liquides, renfermant de 0,1 à 8 % de groupes hydroxyles liés aux atomes de silicium, formés de motifs $(CH_3)_3SiO_{0,5}$, $(CH_3)_2SiO$, $CH_3SiO_{1,5}$ répartis de manière à
conduire à un rapport $(CH_3)_3SiO_{0,5}/(CH_3)_2SiO$ de 0,01 à 0,15 et

à un rapport $CH_3SiO_{1,5}/(CH_3)_2SiO$ de 0,1 à 1,5.

- des huiles α - ω di(hydroxy)diméthylpolysiloxanes de viscosité 10 à 300 mPa.s à 25 °C et des huiles α - ω di(hydroxy)méthylphénylpolysiloxanes de viscosité 200 à 1 000 mPa.s à 25 °C.
- du diphénylsilanediol, du tétraméthyl-1,1,3,3, disiloxanediol.

Les polymères α - ω bis(triorganosiloxy)diorganopolysiloxanes précédents peuvent être remplacés totalement ou partiellement par des composés organiques inertes vis-à-vis des divers constituants des bases et miscibles au moins avec les polymères diorganopolysiloxanes A. Comme exemples concrets de ces composés organiques peuvent être mentionnés les polyalkylbenzènes obtenus par alkylation du benzène à l'aide d'oléfines à longue chaîne, en particulier les oléfines à 12 atomes de carbone issues de la polymérisation du propylène. Des composés organiques de ce type figurent par exemple dans les brevets français FR-A-2 392 476 et FR-A-2 446 849, chacun des composés organosiliciques ci-avant peut être utilisé à raison de 1 à 150 parties, de préférence 3 à 100 parties, pour 100 parties de diorganopolysiloxanes A.

Des ingrédients non organosiliciques peuvent aussi être introduits, par exemple, des stabilisants thermiques. Ces composés améliorent la résistance à la chaleur des élastomères silicones. Ils peuvent être choisis parmi les sels d'acides carboxyliques, oxydes et hydroxydes de terres rares, et plus spécialement les oxydes et hydroxydes cériques ainsi que parmi le bioxyde de titane de combustion et les divers oxydes de fer. On emploie avantageusement de 0,1 à 15 parties, de préférence de 0,15 à 12 parties de stabilisants thermiques pour 100 parties des diorganopolysiloxanes A.

Pour fabriquer les compositions conformes à l'invention, il est nécessaire dans le cas des compositions mono-composantes d'utiliser un appareillage qui permette de mélanger intimement à l'abri de l'humidité, avec et sans apport de chaleur, les divers constituants fondamentaux auxquels sont éventuellement ajoutés les adjuvants et additifs précités.

Tous ces ingrédients peuvent être chargés dans l'appareillage selon un ordre quelconque d'introduction. Ainsi il est possible de mélanger tout d'abord les polymères diorganopolysiloxanes A, l'agent d'adhérence C et les charges D et d'ajouter ensuite à l'empâtage obtenu les réticulants B et le catalyseur E.

Il est également possible de mélanger les polymères A et les réticulants B et d'ajouter ultérieurement, les charges D, l'agent d'adhérence C et catalyseur E. Au cours de ces opérations, les mélanges peuvent être chauffés à une température comprise dans l'intervalle 50-118 °C sous la pression atmosphérique ou sous une pression réduite afin de favoriser le départ de matières volatiles telles que de l'eau, des polymères de bas poids moléculaire.

Les exemples suivants illustrent l'invention.

Dans ce qui précède et ce qui suit, sauf mentions contraires, les parties et % sont en poids.

- EXEMPLES 1 ET 2 ET EXEMPLES COMPARATIFS 3 A 8 (compositions non vieillies) :

Dans un mélangeur à agitation tripale on homogénéise dans des conditions sensiblement anhydres à 80 °C :

- 60 parties d'une huile α , ω -dihydroxypolydiméthylsiloxane de viscosité 70 000 mPa.s à 25 °C,
- 40 parties d'une huile α , ω -dihydroxypolydiméthylsiloxane de viscosité 3 500 mPa.s à 25 °C,
- 26 parties d'une huile polydiméthylsiloxane bloquée à chaque extrémité de sa chaîne par un motif triméthylsiloxy de viscosité 1 000 mPa.s à 25 °C.

Le mélange est soumis à une très forte agitation (450 tours/mn) durant 5 minutes et on introduit successivement :

- un mélange de 4 parties de méthyl, tris(méthyléthyl)cétoximesilane et 4 parties de vinyl, tris-(méthyléthylcétoxime)silane, ayant respectivement pour formules :

$CH_3Si[ON = C(CH_3)C_2H_5]_3$ et

$CH_2 = CHSi[ON = C(CH_3)C_2H_5]_3$.

On abaisse l'agitation à 250 t/mn et on ajoute 16 parties de silice de combustion de surface spécifique BET 150 $m^2/g$ et 0,04 g de bis-acétylacétonate de dibutylétain.

On ajoute alors différents agents d'adérence selon des quantités équimolaires.

Les compositions sont dévolatilisées 3 minutes sous 1,33 KPa, refroidies à 20 °C et conservées à l'abri de l'air.

Sur chaque composition contenant des agents d'adhérence différents on effectue différentes mesures

pour apprécier la réactivité et la stabilité au stockage ainsi que les propriétés physiques des élastomères résultants.

On étale une première fraction à température ambiante (25 °C, humidité relative 50 %) selon une couche de 2 mm d'épaisseur sur une plaque de polyéthylène préalablement enduite d'un détergent commercial. On apprécie alors le temps en minutes (T.F.P.) pour lequel on obtient un toucher non coulant.

Sur le film vieux de 2 ou 7 jours, on mesure la dureté SHORE A à 2 jours (DSA 2 j) et à 7 jours (DSA 7 j) selon la norme NF-T-51 109.

Sur le film vieux de 7 jours on mesure :

- la résistance à la rupture (R/R) en MPa selon la norme NF-T-46 002,
- l'allongement à la rupture (A/R) en MPs selon la norme NF-T-46 002,
- le module (M.Y) en MPa pour un allongement de 100 %.

Appréciation de l'adhérence.

Une autre fraction de la composition est utilisée pour confectionner des éprouvettes conformes à la norme ASA-116-1-1960.

On place face à face à 12 mm l'une de l'autre deux plaques carrées de 50 mm de côté, constituées du matériau envers lequel on désire mesurer l'adhérence de la composition durcie en élastomère. On bouche ensuite totalement avec des cales de bois l'espace ménagé entre les deux plaques sauf la partie médiane de cet espace de façon à délimiter une cavité, de dimensions 50 x 12 x 12 mm, s'étendant d'un bord à l'autre des plaques. On remplit cette cavité avec la composition, abandonne l'ensemble 28 jours à la température ambiante et enlève les cales pour libérer l'éprouvette. Celle-ci comporte donc deux plaques du même matériau liées l'une à l'autre, selon une de leurs médianes par un barreau parallélépipédique en élastomère.

Les éprouvettes ainsi fabriquées sont réparties en qua tre lots d'égale importance, les éprouvettes constituant chaque lot se différenciant entre elles par la nature du matériau des plaques, à savoir le verre, l'aluminium, le polychlorure de vinyle (PVC), et le béton.

On mesure la résistance à la rupture (R/R) en MPa et l'allongement à la rupture (A/R) en % en suivant les recommandations de la norme ASA-116-1-1960.

Les ruptures obtenues sont nommées cohésives (COH) si elles ont lieu dans la masse du barreau d'élastomère. Elles sont nommées adhésives (ADH) si la rupture se fait par décollement du barreau au niveau de ses zones de contact avec les plaques.

Les résultats obtenus sont rassemblés dans le tableau 1 ci-après. La signification des symboles désignant les différents agents d'adhérences sont les suivants :

A : 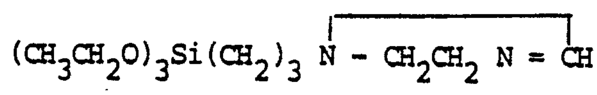

B : $(CH_3CH_2O)_3Si(CH_2)_3\ NH_2$

C : 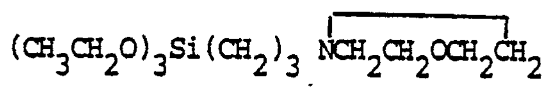

D : 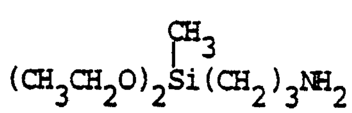

E : 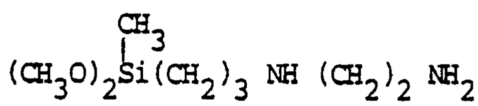

**TABLEAU 1**

| AGENT D'ADHERENCE | Ex | PROPRIETES MECANIQUES | | | | | | ADHERENCE | | | | | | | |
|---|---|---|---|---|---|---|---|---|---|---|---|---|---|---|---|
| | | T.F.P. | D.S.A. | D.S.A. | R/R | A/R | M.Y. | VERRE | | ALU | | PVC | | BETON | |
| | | mn | 2 J | 7 J | MPa | % | MPa | R/R MPa | A/R % | R/R MPa | A/R % | R/R MPa | A/R % | R/R MPa | A/R % |
| A (1,25 parties) | 1 | 10 | 24 | 26 | 2,02 | 424 | 0,63 | 0,50 COH. | 81 | 0,43 COH. | 80 | 0,54 COH. | 60 | 0,50 COH/ADH | 60 |
| | 2 | 15 | 25 | 27 | 2,07 | 486 | 0,64 | 0,65 COH. | 95 | 0,59 COH. | 75 | 0,61 COH. | 87 | 0,64 ADH. | 46 |
| B (1 partie) | 3 | 10 | 24 | 26 | 2,01 | 364 | 0,68 | 0,44 COH. | 66 | 0,78 COH. | 66 | 0,30 ADH. | 34 | 0,45 ADH. | 57 |
| | 4 | 10 | 26 | 28 | 1,96 | 457 | 0,62 | 0,59 COH. | 71 | 0,77 COH. | 93 | 0,44 ADH. | 59 | 0,43 ADH. | 39 |
| C (1,3 parties) | 5 | 15 | 24 | 26 | 1,98 | 460 | 0,58 | 0,41 ADH. | 27 | 0,21 ADH. | 17 | 0,09 ADH. | 17 | 0,40 ADH. | 37 |
| | 6 | 15 | 23 | 25 | 2,14 | 509 | 0,60 | 0,25 | 20 | 0,22 | 18 | 0,12 | 22 | 0,37 | 31 |
| D (0,85 partie) | 7 | 15 | 25 | 26 | 2,13 | 401 | 0,68 | 0,27 ADH. | 20 | 0,40 ADH. | 78 | 0,17 ADH. | 15 | 0,40 ADH. | 37 |
| E (0,95 partie) | 8 | 10 | 24 | 24 | 2,17 | 345 | 0,66 | 0,45 ADH. | 70 | 0,40 ADH. | 66 | 0,33 ADH. | 38 | 0,10 ADH. | 10 |

- EXEMPLES 9 ET 10 ET EXEMPLES COMPARATIFS 11 A 16 : (Compositions vieillies 1 jour à 100 °C) :

On effectue exactement les mêmes opérations qu'aux exemples 1 à 8 sauf que l'on utilise pour faire les films une composition ayant subi un vieillissement accéléré dans des conditions anhydres 24 heures à 100 °C.

La réticulation du film a lieu à 25 °C.
Les résultats obtenus sont rassemblés dans le tableau 2 ci-après.

TABLEAU 2

| AGENT D'ADHERENCE | Ex | PROPRIETES MECANIQUES | | | | | |
|---|---|---|---|---|---|---|---|
| | | T.F.P. mn | D.S.A. 2 J | D.S.A. 7 J | R/R MPa | A/R % | M.Y. MPa |
| A | 9 | 10 | 21 | 24 | 1,60 | 425 | 0,59 |
| | 10 | 10 | 22/23 | 25 | 1,37 | 449 | 0,45 |
| B | 11 | 15 | 22 | 25 | 1,38 | 372 | 0,58 |
| | 12 | 10 | 24 | 26 | 1,39 | 406 | 0,49 |
| C | 13 | 10 | 21 | 21 | 1,62 | 414 | 0,52 |
| | 14 | 10 | 18 | 22 | 1,41 | 408 | 0,45 |
| D | 15 | 10 | 20 | 22 | 1,51 | 418 | 0,54 |
| E | 16 | 10 | 21 | 21 | 1,63 | 431 | 0,61 |

- EXEMPLES 17 ET 18 ET EXEMPLES COMPARATIFS 19 0 24 : (compositions vieillies 2 jours à 100 °C, réticulation à 25 °C).

On effectue exactement les mêmes opérations qu'aux exemples 1 à 8 sauf que l'on utilise pour faire les films une composition ayant subi un vieillissement accéléré dans des conditions anhydres 48 heures à 100 °C. La réticulation du film et des éprouvettes a lieu à 25 °C.

Les résultats cbtenus sont rassemblés dans le tableau 3 ci-après :

TABLEAU 3

| AGENT D'ADHERENCE | Ex | PROPRIETES MECANIQUES | | | | | | ADHERENCE | | | | | | | |
|---|---|---|---|---|---|---|---|---|---|---|---|---|---|---|---|
| | | T.F.P. | D.S.A. | D.S.A. | R/R | A/R | M.Y. | VERRE | | ALU | | PVC | | BETON | |
| | | mn | 2 J | 7 J | MPa | % | MPa | R/R MPa | A/R % | R/R MPa | A/R % | R/R MPa | A/R % | R/R MPa | A/R % |
| A | 17 | 10 | 19 | 24 | 1,34 | 451 | 0,50 | 0,50 COH. | 50 | 0,48 COH. | 63 | 0,44 COH. | 64 | 0,40 COH/ADH | 43 |
| | 18 | 15 | 20/21 | 24 | 1,37 | 537 | 0,42 | 0,48 COH. | 112 | 0,44 COH. | 81 | 0,45 COH. | 101 | 0,39 ADH. | 59 |
| B | 19 | 15 | 20 | 20 | 1,27 | 351 | 0,52 | 0,48 COH. | 63 | 0,44 COH. | 68 | 0,40 COH. | 78 | 0,34 ADH. | 33 |
| | 20 | 12 | 20 | 23 | 1,18 | 351 | 0,41 | 0,42 COH. | 63 | 0,49 COH. | 92 | 0,42 ADH. | 68 | 0,32 ADH. | 42 |
| C | 21 | 15 | 17 | 20 | 1,36 | 458 | 0,46 | 0,27 COH. | 31 | 0,18 COH. | 18 | 0,45 COH. | 52 | 0,28 ADH. | 43 |
| | 22 | 15 | 15 | 20 | 1,39 | 447 | 0,39 | 0,39 COH. | 88 | 0,48 COH. | 103 | 0,46 COH. | 56 | 0,22 ADH. | 28 |
| D | 23 | 10 | 19 | 19 | 1,31 | 360 | 0,48 | 0,42 COH. | 53 | 0,43 ADH. | 59 | 0,45 ADH. | 60 | 0,27 ADH. | 44 |
| E | 24 | 10 | 20 | 20 | 1,27 | 348 | 0,54 | 0,44 COH. | 60 | 0,44 COH/ADH. | 63 | 0,45 ADH. | 70 | 0,5 ADH. | 83 |

- EXEMPLES 25 ET 26 ET EXEMPLES COMPARATIFS 27 A 32 : (réticulation à 0 °C sur des compositions non vieillies et vieillies 48 heures à 100 °C.

On effectue les mêmes opérations qu'aux exemples 1 à 8 sauf que l'on utilise pour faire les films une composition non vieillie ou ayant subi un vieillissement accéléré de 4 heures à 100 °C. La réticulation a lieu à 0 °C.

Les résultats obtenus sont rassemblés dans le tableau 4 ci-après :

TABLEAU 4

| | | COMPOSITIONS INITIALES | | | COMPOSITIONS VIEILLIES 2j/100 °C | | |
|---|---|---|---|---|---|---|---|
| AGENT D'ADHERENCE | Ex | R/R MPa | A/R % | M.Y. | R/R | A/R | M.Y. |
| A | 25 | 1,05 | 755 | 0,28 | 0,34 | 448 | 0,16 |
| A | 26 | 1,02 | 782 | 0,24 | 0,32 | 437 | 0,14 |
| B | 27 | 0,84 | 640 | 0,27 | 0,23 | 324 | 0,13 |
| B | 28 | 0,77 | 622 | 0,25 | 0,27 | 348 | 0,14 |
| C | 29 | pas de propriétés mécaniques | | | pas de propriétés mécaniques | | |
| C | 30 | pas de propriétés mécaniques | | | pas de propriétés mécaniques | | |
| D | 31 | 0,71 | 598 | 0,20 | - | - | - |
| E | 32 | 0,65 | 628 | 0,20 | - | - | - |

Des tableaux 1 à 4 il appraît que, sur les compositions vieillies ou non après réticulation à 25 °C, l'agent d'adhérence A présente le meilleur compromis stabilité/réactivité/adhérence. La supériorité de l'agent d'adhérence A au niveau du compris stabilité/réactivité/propriétés mécaniques est encore plus visible pour les compositions réticulées à 0 °C et vieillies ou non.

**Revendications**

**Revendications pour les Etats contractants suivants : AT, BE, CH, DE, FR, GB, IT, LI, LU, NL, SE**

**1.** Composition diorganopolysiloxane stable au stockage en l'absence d'humidité et durcissable en un élastomère en présence d'humidité, caractérisée en ce qu'elle comporte :

A. - 100 parties d'au moins un polymère $\alpha$ - $\omega$ dihydroxydiorganopolysiloxane de viscosité 700 à 1 000 000 mPa.s à 25 °C, formé d'une succession de motifs diorganosiloxy de formule $T_2SiO$, dans laquelle les radicaux T, identiques ou différents, représentent des radicaux hydrocarbonés ayant de 1 à 10 atomes de carbone, au moins 50 % en nombre des radicaux T étant des radicaux méthyle,

B. - 0,5 à 20 parties d'au moins un agent de réticulation comportant au moins un cétiminoxysilane,

C. - 0,1 à 20 parties d'un agent d'adhérence choisi parmi :

C.1. - les silanes de formule :

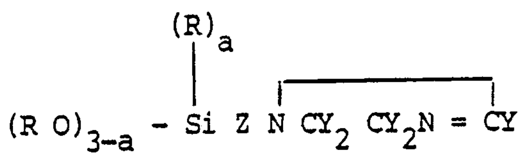

(1)

dans laquelle :

- les radicaux R, identiques ou différents représentent un radical alkyle en $C_1$-$C_{12}$, de préférence en $C_1$-$C_4$,
- les radicaux Y, identiques ou différents sont choisis parmi un radical R et un atome d'hydrogène,
- Z est un radical hydrocoarboné aliphatique bivalent linéaire ou ramifié en $C_2$-$C_{12}$, de préférence en $C_2$-$C_5$,
- a représente 0, 1 ou 2.

C.2. - un copolymère diorganopolysiloxane formé d'une succession de motifs $T_2SiO$ tels que définis sous A et comportant au moins un motif siloxane de formule :

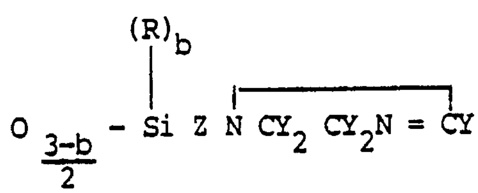

(2)

dans laquelle :

- b égal 1 ou 2 et R, Z et Y ont la définition donnée sous C.1.

D. - 0 à 250 parties de charges minérales.

E. - 0 à 3 parties d'un catalyseur de durcissement.

**2.** Composition selon la revendication 1, caractérisée en ce que l'agent d'adhérence C est le $\gamma$ -( $\Delta$ 2-imidazolinyl)propyl, triéthoxysilane.

**Revendications pour les Etats contractants suivants : ES, GR**

**1.** Composition diorganopolysiloxane stable au stockage en l'absence d'humidité et durcissable en un élastomère en présence d'humidité, caractérisée en ce qu'elle comporte :

A.- 100 parties d'au moins un polymère $\alpha,\omega$-dihydroxydiorganopolysiloxane de viscosité 700 à 1 000 000 mPa.s à 25 °C,formé d'une succession de motifs diorganosiloxy de formule $T_2SiO$, dans laquelle les radicaux T, identiques ou différents, représentent des radicaux hydrocarbonés ayant de

1 à 10 atomes de carbone, au moins 50 % en nombre des radicaux T étant des radicaux méthyle,
B. - 0,5 à 20 parties d'au moins un agent de réticulation comportant au moins un cétiminoxysilane,
C. - 0,1 à 20 parties d'un agent d'adhérence choisi parmi :
C.1. - les silanes de formule :

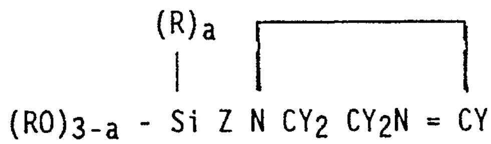
(1)

dans laquelle :
- les radicaux R, identiques ou différents, représentent un radical alkyle en $C_1$-$C_{12}$, de préférence en $C_1$-$C_4$,
- les radicaux Y, identiques ou différents, sont choisis parmi un radical R et un atome d'hydrogène,
- Z est un radical hydrocarboné aliphatique bivalent linéaire ou ramifié en $C_2$-$C_{12}$, de préférence en $C_2$-$C_5$,
- a représente 0, 1 ou 2.

C.2. - un copolymère diorganopolysiloxane formé d'une succession de motifs $T_2SiO$ tels que définis sous A et comportant au moins un motif siloxane de formule :

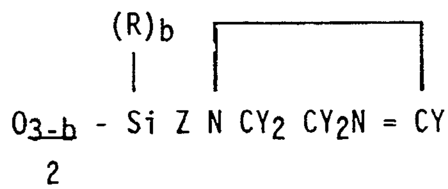
(2)

dans laquelle :
- b égal 1 ou 2 et R, Z et Y ont la définition donnée sous C.1.

D. - 0 à 250 parties de charges minérales,
E. - 0 à 3 parties d'un catalyseur de durcissement.

2. Composition selon la revendication 1, caractérisée en ce que l'agent d'adhérence C est le γ-(Δ2-imidazolinyl)propyl, triéthoxysilane.

3. Procédé de préparation de composition diorganopolysiloxane stable au stockage en l'absence d'humidité et durcissable en un élastomère en présence d'humidité, caractérisé en ce que l'on mélange intimement à l'abri de l'humidité avec ou sans apport de chaleur :
A. - 100 parties d'au moins un polymère α,ω-dihydroxydiorganopolysiloxane de viscosité 700 à 1 000 000 mPa.s à 25 °C, formé d'une succession de motifs diorganosiloxy de formule $T_2SiO$, dans laquelle les radicaux T, identiques ou différents, représentent des radicaux hydrocarbonés ayant de 1 à 10 atomes de carbone, au moins 50 % en nombre des radicaux T étant des radicaux méthyle,
B. - 0,5 à 20 parties d'au moins un agent de réticulation comportant au moins un cétiminoxysilane,
C. - 0,1 à 20 parties d'un agent d'adhérence choisi parmi :
C.1. - les silanes de formule :

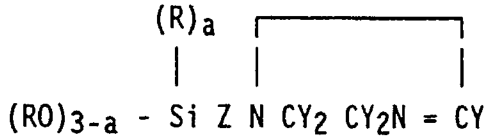
(1)

dans laquelle :

- les radicaux R, identiques ou différents, représentent un radical alkyle en $C_1$-$C_{12}$, de préférence en $C_1$-$C_4$,
- les radicaux Y, identiques ou différents, sont choisis parmi un radical R et un atome d'hydrogène,
- Z est un radical hydrocarboné aliphatique bivalent linéaire ou ramifié en $C_2$-$C_{12}$, de préférence en $C_2$-$C_5$,
- a représente 0, 1 ou 2.

C.2. - un copolymère diorganopolysiloxane formé d'une succession de motifs $T_2SiO$ tels que définis sous A et comportant au moins un motif siloxane de formule :

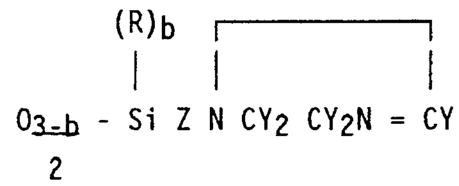

(2)

dans laquelle :

- b égal 1 ou 2 et R, Z et Y ont la définition donnée sous C.1.

D. - 0 à 250 parties de charges minérales,

E. - 0 à 3 parties d'un catalyseur de durcissement.

4. Procédé selon la revendication 3, caractérisé en ce que l'agent d'adhérence C est le γ-(Δ2-imidazolinyl)propyl, triéthoxysilane.

5. Procédé selon la revendication 3 ou 4, caractérisé en ce qu'on mélange tout d'abord les polymères A, l'agent d'adhérence C et les charges D et on ajoute ensuite à l'empâtage ainsi obtenu les réticulants B et le catalyseur E.

6. Procédé selon la revendication 3 ou 4, caractérisé en ce qu'on mélange les polymères A, les réticulants B et on ajoute ultérieurement les charges D, l'agent d'adhérence C et le catalyseur E.

**Claims**

**Claims for the following Contracting States : AT, BE, CH, DE, FR, GB, IT, LI, LU, NL, SE**

1. Diorganopolysiloxane composition stable in storage in the absence of moisture and capable of curing to an elastomer in the presence of moisture, characterised in that it comprises:

A. - 100 parts of at least one α,ω-dihydroxydiorganopolysiloxane polymer with a viscosity of 700 to 1,000,000 mPa s at 25°C, made up of a series of diorganosiloxy units of formula $T_2SiO$, in which the radicals T, which are identical or different, denote hydrocarbon radicals containing from 1 to 10 carbon atoms, at least 50% of the number of the radicals T being methyl radicals,

B. - 0.5 to 20 parts of at least one crosslinking agent containing at least one ketiminoxysilane,

C. - 0.1 to 20 parts of an adhesion promoter chosen from:

C.1. - the silanes of formula:

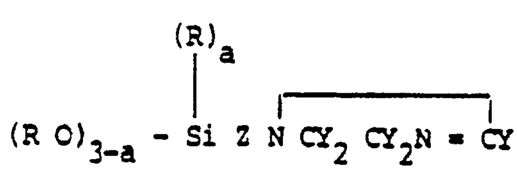

(1)

in which:

- the radicals R, which are identical or different, denote a $C_1$-$C_{12}$, preferably $C_1$-$C_4$, alkyl radical,
- the radicals Y, which are identical or different, are chosen from a radical R and a hydrogen atom,

- Z is a linear or branched $C_2$-$C_{12}$, preferably $C_2$-$C_5$, divalent aliphatic hydrocarbon radical,
- a denotes 0, 1 or 2,

C.2. - a diorganopolysiloxane copolymer made up of a series of $T_2SiO$ units such as defined under A and containing at least one siloxane unit of formula:

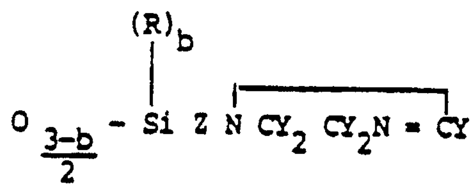

(2)

in which:

- b equal to 1 or 2 and R, Z and Y have the definition given under C.1.

D. - 0 to 250 parts of inorganic fillers,

E. - 0 to 3 parts of a cure catalyst.

2. Composition according to Claim 1, characterised in that the adhesion promoter C is γ-(Δ2-imidazolinyl)-propyltriethoxysilane.

**Claims for the following Contracting States : ES, GR**

1. Diorganopolysiloxane composition stable in storage in the absence of moisture and capable of curing to an elastomer in the presence of moisture, characterised in that it comprises:

A. - 100 parts of at least one α,ω-dihydroxydiorganopolysiloxane polymer with a viscosity of 700 to 1,000,000 mPa s at 25° C, made up of a series of diorganosiloxy units of formula $T_2SiO$, in which the radicals T, which are identical or different, denote hydrocarbon radicals containing from 1 to 10 carbon atoms, at least 50% of the number of the radicals T being methyl radicals,

B. - 0.5 to 20 parts of at least one crosslinking agent containing at least one ketiminoxysilane,

C. - 0.1 to 20 parts of an adhesion promoter chosen from:

C.1. - the silanes of formula:

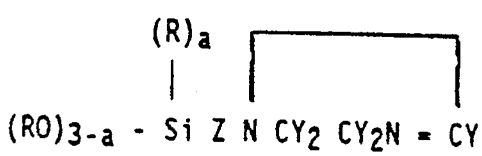

(1)

in which:

- the radicals R, which are identical or different, denote a $C_1$-$C_{12}$, preferably $C_1$-$C_4$, alkyl radical,
- the radicals Y, which are identical or different, are chosen from a radical R and a hydrogen atom,
- Z is a linear or branched $C_2$-$C_{12}$, preferably $C_2$-$C_3$, divalent aliphatic hydrocarbon radical,
- a denotes 0, 1 or 2,

C.2. - a diorganopolysiloxane copolymer made up of a series of $T_2SiO$ units such as defined under A and containing at least one siloxane unit of formula:

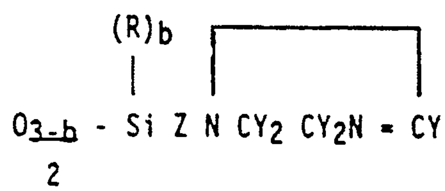

(2)

in which:

- b equal to 1 or 2 and R, Z and Y have the definition given under C.1.

D. - 0 to 250 parts of inorganic fillers,

E. - 0 to 3 parts of a cure catalyst.

**2.** Composition according to Claim 1, characterised in that the adhesion promoter C is γ-(Δ2-imidazolinyl)-propyltriethoxysilane.

**3.** Process for the preparation of a diorganopolysiloxane composition stable in storage in the absence of moisture and capable of curing to an elastomer in the presence of moisture, characterised in that the following are mixed intimately with protection against moisture with or without application of heat:

A. - 100 parts of at least one α,ω-dihydroxydiorganopolysiloxane polymer with a viscosity of 700 to 1,000,000 mPa s at 25°C, made up of a series of diorganosiloxy units of formula $T_2SiO$, in which the radicals T, which are identical or different, denote hydrocarbon radicals containing from 1 to 10 carbon atoms, at least 50% of the number of the radicals T being methyl radicals,

B. - 0.5 to 20 parts of at least one crosslinking agent containing at least one ketiminoxysilane,

C. - 0.1 to 20 parts of an adhesion promoter chosen from:

C.1. - the silanes of formula:

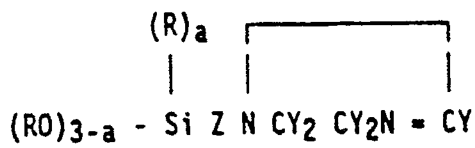

(1)

in which:

- the radicals R, which are identical or different, denote a $C_1$-$C_{12}$, preferably $C_1$-$C_4$, alkyl radical,
- the radicals Y, which are identical or different, are chosen from a radical R and a hydrogen atom,
- Z is a linear or branched $C_2$-$C_{12}$, preferably $C_2$-$C_5$, divalent aliphatic hydrocarbon radical,
- a denotes 0, 1 or 2,

C.2. - a diorganopolysiloxane copolymer made up of a series of $T_2SiO$ units such as defined under A and containing at least one siloxane unit of formula:

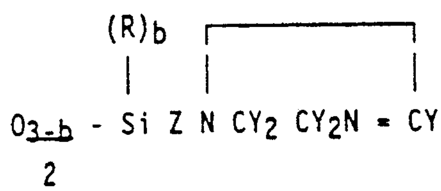

(2)

in which:

- b equal to 1 or 2 and R, Z and Y have the definition given under C.1.

D. - 0 to 250 parts of inorganic fillers,

E. - 0 to 3 parts of a cure catalyst.

**4.** Process according to Claim 3, characterised in that the adhesion promoter C is γ-(Δ2-imidazolinyl)-propyltriethoxysilane.

**5.** Process according to Claim 3 or 4, characterised in that the polymers A, the adhesion promoter C and the fillers D are mixed first of all and the crosslinkers B and the catalyst E are then added to the dough thus obtained.

**6.** Process according to Claim 3 or 4, characterised in that the polymers A and the crosslinkers B are mixed and the fillers D, the adhesion promoter C and the catalyst E are added subsequently.

**Patentansprüche**

**Patentansprüche für folgende Vertragsstaaten : AT, BE, CH, DE, FR, GB, IT, LI, LU, NL, SE**

1. In Abwesenheit von Feuchtigkeit lagerungsstabile und in Gegenwart von Feuchtigkeit zu einem Elastomeren härtbare Diorganopolysiloxan-Zusammensetzung, dadurch gekennzeichnet, daß sie enthält:

   A. - 100 Teile zumindest eines α,ω-Dihydroxydiorganopolysiloxan-Polymeren mit einer Viskosität von 700 bis 1 000 000 mPa.s bei 25° C, gebildet aus einer Abfolge von Diorganosiloxy-Gruppierungen der Formel $T_2SiO$, worin die Reste T, die gleich oder verschieden sind, Kohlenwasserstoffreste mit 1 bis 10 Kohlenstoffatomen aufweisen, wobei zumindest 50% der Anzahl der Reste T Methylgruppen sind,

   B. - 0,5 bis 20 Teile zumindest eines Vernetzungsmittels, welches zumindest ein Ketiminoxysilan enthält,

   C. - 0,1 bis 20 Teile eines Haftmittels, ausgewählt unter

   C.1 - den Silanen der Formel

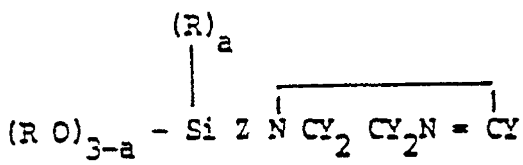

(1)

   worin

   - die Reste R, die gleich oder verschieden sind, einen $C_{1-12}$-, vorzugsweise $C_{1-4}$-Alkylrest wiedergeben,
   - die Reste Y, die gleich oder verschieden sind, unter einem Rest R und einem Wasserstoffatom ausgewählt sind,
   - Z ein linearer oder verzweigter, zweiwertiger, aliphatischer $C_{2-12}$-, vorzugsweise $C_{2-5}$-Kohlenwasserstoffrest ist,
   - a für 0, 1 oder 2 steht,

   C.2 - einem Diorganopolysiloxan-Copolymeren, gebildet aus einer Abfolge von Gruppierungen $T_2SiO$, wie vorstehend unter A definiert, und enthaltend zumindest eine Siloxan-Gruppierung der Formel

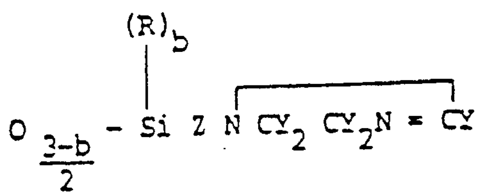

(2)

   worin

   - b gleich 1 oder 2 ist und R, Z und Y die vorstehend unter C.1 angegebene Bedeutung besitzen,

   D. - 0 bis 250 Teile mineralische Füllstoffe,

   E. - 0 bis 3 Teile eines Härtungskatalysators.

2. Zusammensetzung gemäß Anspruch 1, dadurch gekennzeichnet, daß das Haftmittel C das γ-(Δ2-Imidazolinyl)-propyl-triethoxysilan ist.

**Patentansprüche für folgende Vertragsstaaten : ES, GR**

1. In Abwesenheit von Feuchtigkeit lagerungsstabile und in Anwesenheit von Feuchtigkeit zu einem Elastomeren härtbare Diorganopolysiloxan-Zusammensetzung, dadurch gekennzeichnet, daß sie enthält:

   A. - 100 Teile zumindest eines α,ω-Dihydroxy-diorganopolysiloxan-Polymeren mit einer Viskosität

von 700 bis 1 000 000 mPa.s bei 25° C, gebildet aus einer Abfolge von Diorganosiloxy-Gruppierungen der Formel $T_2SiO$, worin die Reste T, die gleich oder verschieden sind, Kohlenwasserstoffreste mit 1 bis 10 Kohlenstoffatomen aufweisen, wobei zumindest 50% der Anzahl der Reste T Methylgruppen sind,

B. - 0,5 bis 20 Teile zumindest eines Vernetzungsmittels, welches zumindest ein Ketiminoxysilan enthält,

C. - 0,1 bis 20 Teile eines Haftmittels, ausgewählt unter

C.1 - den Silanen der Formel

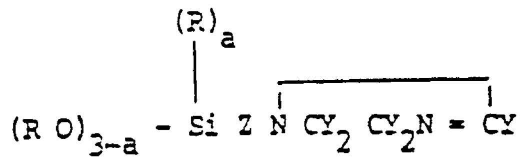

(1)

worin

- die Reste R, die gleich oder verschieden sind, einen $C_{1-12}$-, vorzugsweise $C_{1-4}$-Alkylrest wiedergeben,
- die Reste Y, die gleich oder verschieden sind, unter einem Rest R und einem Wasserstoffatom, ausgewählt sind,
- Z ein linearer oder verzweigter, zweiwertiger, aliphatischer $C_{2-12}$-, vorzugsweise $C_{2-5}$-Kohlenwasserstoffrest ist,
- a für 0, 1 oder 2 steht,

C.2 - einem Diorganopolysiloxan-Copolymeren, gebildet aus einer Abfolge von Gruppierungen $T_2SiO$, wie vorstehend unter A definiert, und enthaltend zumindest eine Siloxan-Gruppierung der Formel

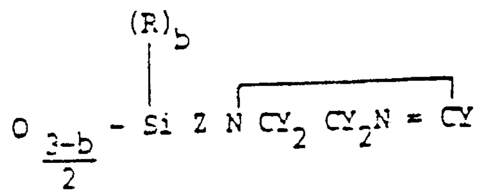

(2)

worin

- b gleich 1 oder 2 ist und R, Z und Y die vorstehend unter C.1 angegebene Bedeutung besitzen,

D. - 0 bis 250 Teile mineralische Füllstoffe,

E. - 0 bis 3 Teile eines Härtungskatalysators.

**2.** Zusammensetzung gemäß Anspruch 1, dadurch gekennzeichnet, daß das Haftmittel C das γ-(Δ2-Imidazolinyl)-propyl-triethoxysilan ist.

**3.** Verfahren zur Herstellung einer in Abwesenheit von Feuchtigkeit lagerungsstabilen und in Gegenwart von Feuchtigkeit zu einem Elastomeren härtbaren Diorganopolysiloxan-Zusammensetzung, dadurch gekennzeichnet, daß man innig unter Feuchtigkeitsausschluß mit oder ohne Wärmezufuhr mischt:

A. - 100 Teile zumindest eines α,ω-Dihydroxy-diorganopolysiloxan-Polymeren mit einer Viskosität von 700 bis 1 000 000 mPa.s bei 25° C, gebildet aus einer Abfolge von Diorganosiloxy-Gruppierungen der Formel $T_2SiO$, worin die Reste T, die gleich oder verschieden sind, Kohlenwasserstoffreste mit 1 bis 10 Kohlenstoffatomen aufweisen, wobei zumindest 50% der Anzahl der Reste T Methylgruppen sind,

B. - 0,5 bis 20 Teile zumindest eines Vernetzungsmittels, welches zumindest ein Ketiminoxysilan enthält,

C. - 0,1 bis 20 Teile eines Haftmittels, ausgewählt unter

C.1 - den Silanen der Formel

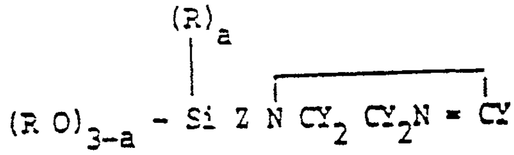

(1)

worin

- die Reste R, die gleich oder verschieden sind, einen $C_{1-12}$-, vorzugsweise $C_{1-4}$-Alkylrest wiedergeben,
- die Reste Y, die gleich oder verschieden sind, unter einem Rest R und einem Wasserstoffatom ausgewählt sind,
- Z ein linearer oder verzweigter, zweiwertiger, aliphatischer $C_{2-12}$-, vorzugsweise $C_{2-5}$-Kohlenwasserstoffrest ist,
- a für 0, 1 oder 2 steht,

C.2 - einem Diorganopolysiloxan-Copolymeren, gebildet aus einer Abfolge von Gruppierungen' $T_2SiO$, wie vorstehend unter A definiert, und enthaltend zumindest eine Siloxan-Gruppierung der Formel

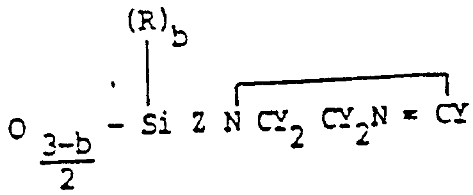

(2)

worin

- b gleich 1 oder 2 ist und R, Z und Y die vorstehend unter C.1 angegebene Bedeutung besitzen,

D. - 0 bis 250 Teile mineralische Füllstoffe,

E. - 0 bis 3 Teile eines Härtungskatalysators.

**4.** Verfahren gemäß Anspruch 3, dadurch gekennzeichnet, daß das Haftmittel C das γ-(Δ2-Imidazolinyl)-propyltriethoxysilan ist.

**5.** Verfahren gemäß Anspruch 3 oder 4, dadurch gekennzeichnet, daß man zunächst die Polymeren A, das Haftmittel C und die Füllstoffe D mischt und hierauf zu der so erhaltenen Anteigmasse die Vernetzungsmittel B und den Katalysator E zufügt.

**6.** Verfahren gemäß Anspruch 3 oder 4, dadurch gekennzeichnet, daß man die Polymeren A, die Vernetzungsmittel B mischt und später die Füllstoffe D, das Haftmittel C und den Katalysator E zugibt.